# EUROPEAN PATENT APPLICATION

(11) **EP 2 833 268 A1**
(43) Date of publication of application: **04.02.2015**
(21) Application number: 13768406.4
(22) Date of filing: 29.03.2013
(51) Int. Cl.: G06F 13/00

(54) **INFORMATION PROCESSING DEVICE**

(30) Priority: 30.03.2012 JP 2012079716
(71) Applicant: NEC Corporation, Tokyo 108-8001 (JP)
(72) Inventor: HORI, Toshio, Tokyo, 1088001 (JP)
(74) Representative: Vossius & Partner
(86) International application number: PCT/JP2013/002184
(87) International publication number: WO 2013/145781

(57) **Abstract**

The information processing device includes a communication means for transmitting connection request information to a server device, and receiving response information which is a response to the connection request information; and a determination means for determining whether or not a connection with the server device succeeded, based on display information which is included in the received response information and displayed on a display device. If the determination means determines that a connection with the server device failed, the communication means transmits the connection request information to the server device.

## Description

### TECHNICAL FIELD

The present invention relates to an information processing device, and in particular, to an information processing device which transmits and receives arbitrary information with a server device connected over a communication network.

### BACKGROUND ART

A technology in which an information processing device, such as a personal computer, establishes a connection with a server device over a communication network such as the Internal, and uses a service offered by the server device, has become popular. As such, when the number of users accessing the server device increases, there is a case where congestion occurs in the communication network so that it is difficult to establish a connection with the server device.

In view of the above, a control technique allowing a server device to avoid congestion, when congestion has occurred in the communication network, has been proposed. For example, a server device (host computer) in Patent Document 1 is configured to calculate a waiting time based on the maximum number of transactions of the server device and the number of currently received accesses transmitted from information processing devices (internet terminals), and notify the information processing devices of the waiting time.

Meanwhile, there is a service in which a server device provides tickets for concerts and watching sport games. For example, as the number of tickets for a concert or watching a sport game is limited, users access the server device providing the tickets when the ticket sales begins in order to purchase the tickets as soon as possible.

As such, in a system where a service providing tickets is applied supposedly to the server device (host computer) of Patent Document 1, even though the server device notifies the information processing devices of the waiting time, there is a case where the users attempt to access the server device before the waiting time elapses.

Patent Document 1: JP 2003-303171 A

### SUMMARY

When congestion has occurred in a communication network, even though a user operates an information processing device to attempt to access a server device, an access to the server device may fail. As such, the user needs to access the server device a number of times until the user successfully accesses the server device. This may increase the effort of operation by the user. Consequently, there is a problem that a burden on the user increases when an information processing device establishes a connection with the server device over the communication network.

In view of the above, an object of the present invention is to provide an information processing device capable of solving the above-described problem, that is, a problem that a burden on a user increases when an information processing device establishes a connection with a server device over a communication network.

In order to achieve the object described above, an information processing device, which is an aspect of the present invention, is configured to include
a communication means for transmitting connection request information to a server device, and receiving response information which is a response to the connection request information; and
a determination means for determining whether or not a connection with the server device succeeded, based on display information which is included in the received response information and displayed on a display device, wherein
if the determination means determines that a connection with the server device failed, the communication means transmits the connection request information to the server device.

Further, an information processing method, which is another aspect of the present invention, is configured to include
transmitting connection request information to a server device, and receiving response information which is a response to the connection request information;
determining whether or not a connection with the server device succeeded, based on display information which is included in the received response information and displayed on a display device; and
if it is determined that a connection with the server device failed, transmitting the connection request information to the server device.

Further, a program, which is another aspect of the present invention, is a program for causing an information processing device to realize
a communication means for transmitting connection request information to a server device, and receiving response information which is a response to the connection request information; and
a determination means for determining whether or not a connection with the server device succeeded, based on display information which is included in the received response information and displayed on a display device, wherein
if the determination means determines that a connection with the server device failed, the communication means transmits the connection request information to the server device.

As the present invention is configured as described above, the present invention has an advantageous effect of improving user convenience when an information processing device establishes a connection with a server device over a communication network.

### BRIEF DESCRIPTION OF DRAWINGS

Fig. 1 is a block diagram showing a configuration of an information processing system according to the present invention.
Fig. 2 is a block diagram showing a configuration of an information processing device according to the present invention.
Fig. 3 is a function block diagram showing a configuration of the information processing device according to the present invention.
Fig. 4 is a diagram showing an exemplary display of a display device.
Fig. 5 is a diagram showing an exemplary display of a display device.
Fig. 6 is a block diagram showing a configuration of a server device according to the present invention.
Fig. 7 is a flowchart showing operation of the information processing device according to the present invention.
Fig. 8 is a flowchart showing operation of the server device according to the present invention.
Fig. 9 is a block diagram showing a configuration of an information processing system according to the present invention.
Fig. 10 is a block diagram showing a configuration of an information processing device according to the present invention.
Fig. 11 is a block diagram showing a configuration of a connection control device according to the present invention.
Fig. 12 is a flowchart showing operation of the information processing device according to the present invention.
Fig. 13 is a flowchart showing operation of the connection control device according to the present invention.

### EXEMPLARY EMBODIMENTS

### <FIRST EXEMPLARY EMBODIMENT>

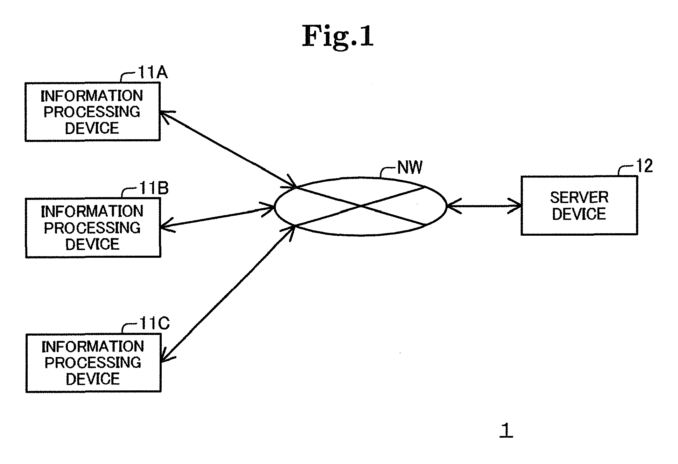

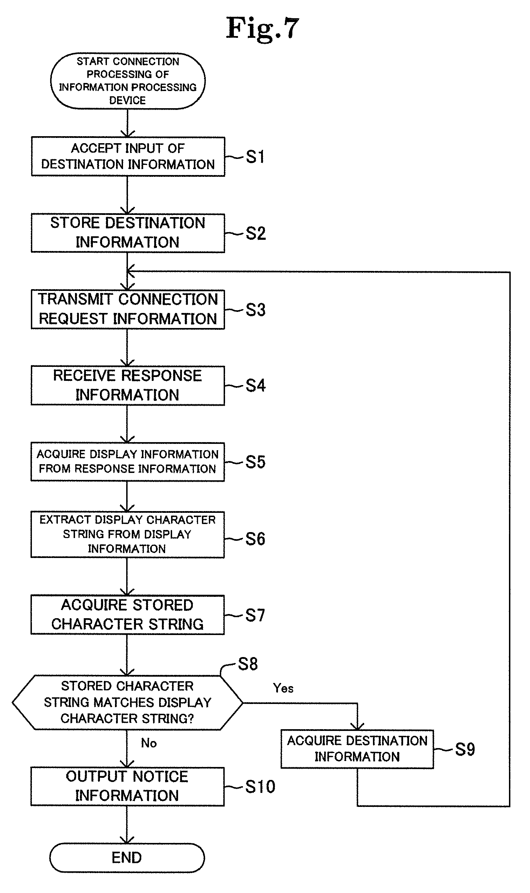

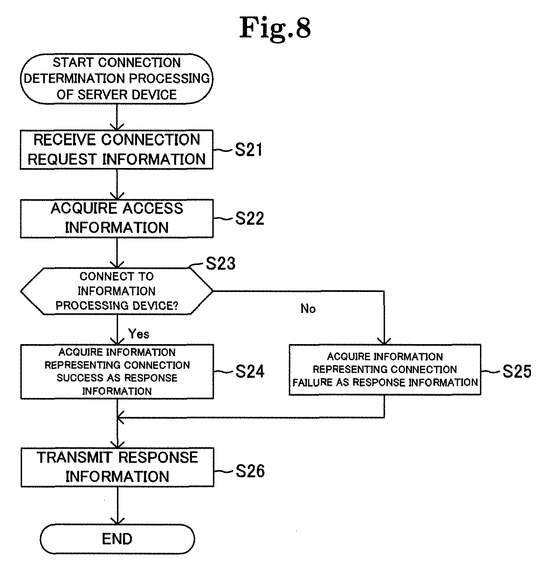

A first exemplary embodiment of the present invention will be described with reference to Figs. 1 to 8. Figs. 1 to 6 are diagrams for explaining a configuration of an information processing system 1. Figs. 7 and 8 are flowcharts for explaining operation of the information processing system 1.

### [Configuration]

Fig. 1 is a block diagram showing a configuration of the information processing system 1 according to the first exemplary embodiment. As shown in Fig. 1, the information processing system 1 includes information processing devices 11 (information processing devices 11A to 11C), a server device 12, and a communication network NW. It should be noted that while Fig. 1 shows three information processing devices 11A, 11B, and 11C, the number of the information processing devices 11 is not limited to three.

Each of the information processing devices 11 transmits connection request information to the server device 12 via the communication network NW. When the server device 12 receives the connection request information transmitted from any of the information processing devices 11, the server device 12 acquires access information representing the number of current accesses (e.g., three) from the information processing devices 11 (e.g., information processing devices 11A to 11C). Then, based on the acquired access information, the server device 12 determines whether or not to establish a connection with the information processing device 11 which transmitted the connection request information, and transmits a determination result to the information processing device 11. When the server device 12 succeeded in establishing a connection with the information processing device 11, the server device 12 begins offering a service held by the server device 12. For example, the server device 12 offers a service of selling tickets of an event (concert, for example) to the information processing device 11.

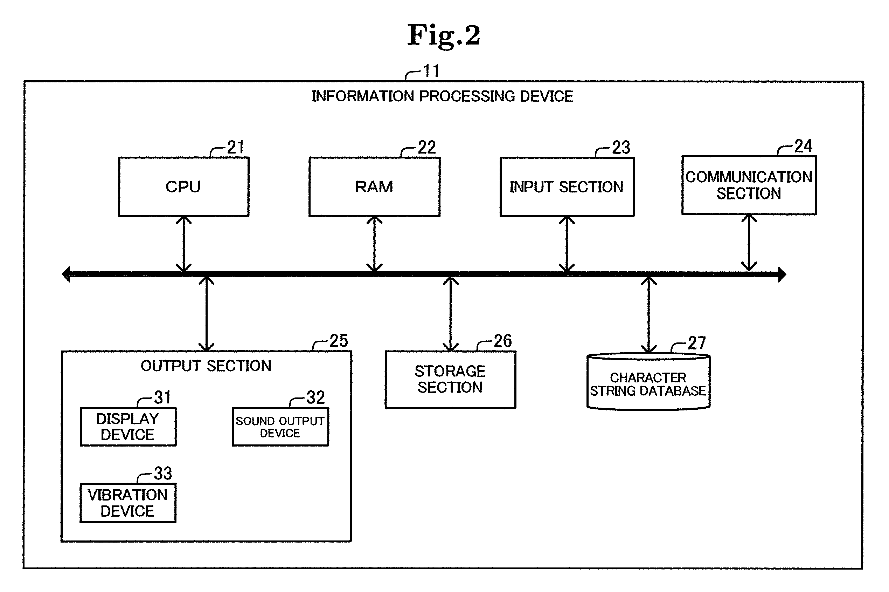

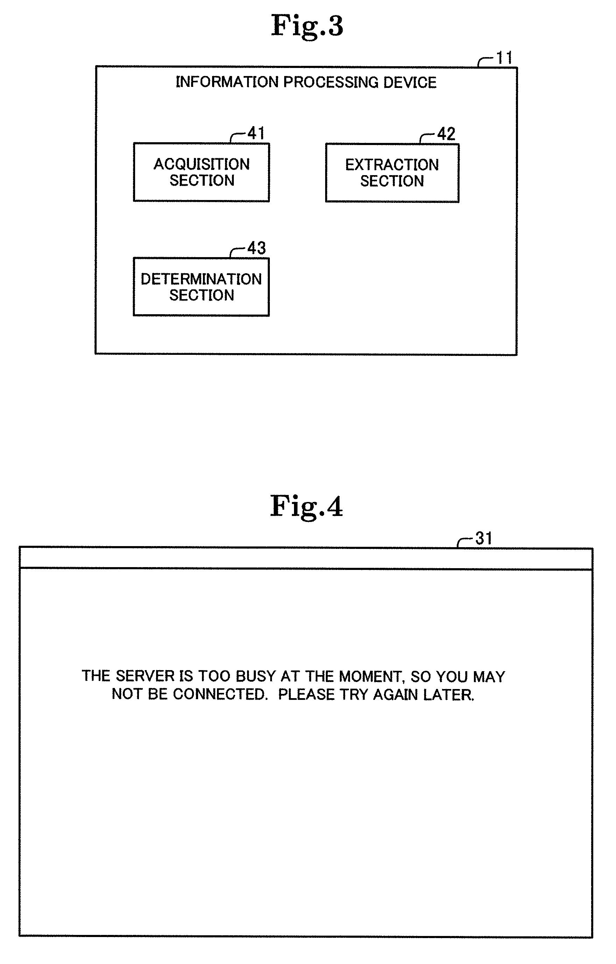

Next, a configuration of each of the information processing devices 11 will be described with reference to Figs. 2 and 3. Fig. 2 is a block diagram showing a configuration of the information processing device 11. Fig. 3 is a block diagram showing a functional configuration of the information processing device 11. As shown in Fig. 2, the information processing device 11 includes a CPU (Central Processing Unit) 21, a RAM (Random Access Memory) 22, an input section 23, a communication section 24, an output section 25, a storage section 26, and a character string database 27.

The CPU 21 reads a program, having been stored in the storage section 26, to the RAM 22, and performs various types of processing of the information processing device 11. For example, the information processing device 11 (CPU 21) executes a program to thereby perform processing of an acquisition section 41, an extraction section 42, and a determination section 43.

The input section 23 accepts an input of destination information (e.g., address of the server device 12) for establishing a connection with the server device 12. Then, the storage section 26 stores the destination information, the input of which has been accepted by the input section 23. If a connection with the server device 12 shown by the destination information failed, the information processing device 11 acquires the stored destination information to thereby be able to request a connection with the server device 12 again (transmit connection request information).

The communication section 24 transmits connection request information, which is information for communicating with the server device 12, to the server device 12 over the communication network NW. Upon receipt of the connection request information from the information processing device 11 over the communication network NW, the server device 12 acquires access information. Access information is information representing the total number of accesses from a plurality of information processing devices 11. Then, based on the acquired access information, the server device 12 determines whether or not to establish a connection with the information processing device 11, and transmits response information representing a determination result (connection success or connection failure) to the information processing device 11. The communication section 24 of the information processing device 11 receives the response information with respect to the connection request information from the server device 12 over the communication network NW.

The acquisition section 41 acquires display information from the response information transmitted from the server device 12 and received by the communication section 24. Display information is information displayed on a display device 31. Display information is information such as text, images, and the like which are viewed by the user. The output section 25 includes the display device 31, a sound output device 32, and a vibration device 33. The output section 25 outputs the display information acquired by the acquisition section 41, to the display device 31. It should be noted that the output section 25 is able to control the sound output device 32 to output sounds. Further, the output section 25 is able to control the vibration device 33 to vibrate the information processing device 11. It should be noted that the output section 25 only needs to include at least the display device 31. Further, the output section 25 may be configured of any combination of the display device 31, the sound output device 32, and the vibration device 33.

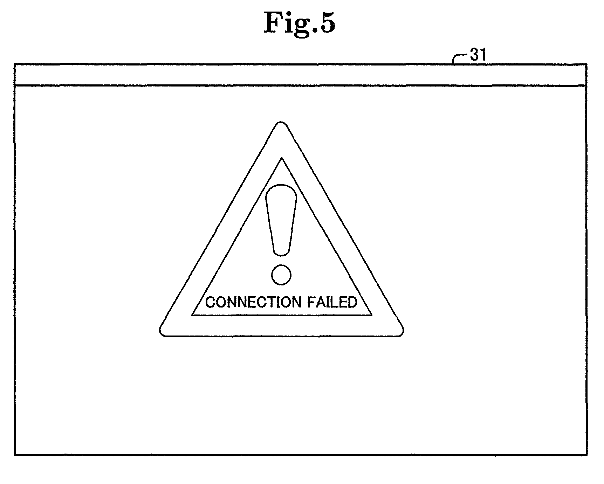

The extraction section 42 (extraction means) extracts, from the display information, a display character string (extraction information) which is a character string (information satisfying the predetermined criteria) included in the display information displayed on the display device 31. For example, as shown in Fig. 4, text that "The server is too busy at the moment, so you may not be connected. Please try again later.", displayed on the display device 31, is extracted as a display character string. It should be noted that the extraction section 42 is able to extract the whole text as a display character string, and also extract part of the text (e.g., "too busy", "may not be connected", or the like in Fig. 4) as a display character string. The extraction section 42 is also able to extract a character string displayed in the image included in the display information. As shown in Fig. 5, the extraction section 42 is able to extract a text "connection failed" included in the image displayed on the display device 31 as a display character string.

The character string database 27 (storage means) stores a stored character string (stored information) which is a predetermined character string. A stored character string is a character string which is displayed when a connection with the server device 12 failed. For example, the character string database 27 stores text that "The server is too busy at the moment, so you may not be connected. Please try again later." as a stored character string. Then, the acquisition section 41 acquires the stored character string stored in the character string database 27.

The determination section 43 (determination means) determines whether or not the stored character string (stored information) acquired by the acquisition section 41 matches the display character string (extraction information) extracted by the extraction section 42. If the determination section 43 determines that the stored character string matches the display character string, the determination section 43 determines that a connection with the server device 12 failed. Then, the acquisition section 41 acquires destination information stored in the storage section 26. Then, the communication section 24 retransmits connection request information to the server device 12 shown in the acquired destination information. This means that when the information processing device 11 failed in establishing a connection with the server device 12, the information processing device 11 automatically begins processing for establishing a connection with the server device 12.

On the other hand, if the determination section 43 determines that the stored character string does not match the display character string, the determination section 43 determines that a connection with the server device 12 succeeded. Then, the output section 25 (output means) outputs notice information representing that a connection with the server device 12 succeeded, to the outside (e.g. user) of the information processing device 11. For example, the output section 25 displays a screen including the notice information on the display device 31. The output section 25 is also able to output the notice information by blinking the display screen of the display device 31. Further, the output section 25 is able to control the sound output device 32 so as to output the notice information by sounds. Furthermore, the output section 25 is able to control the vibration device 33 so as to output the notice information by vibration. Consequently, as the user does not need to operate and watch the information processing device 11 until the information processing device 11 succeeded in establishing a connection with the server device 12, it is possible to improve the user convenience.

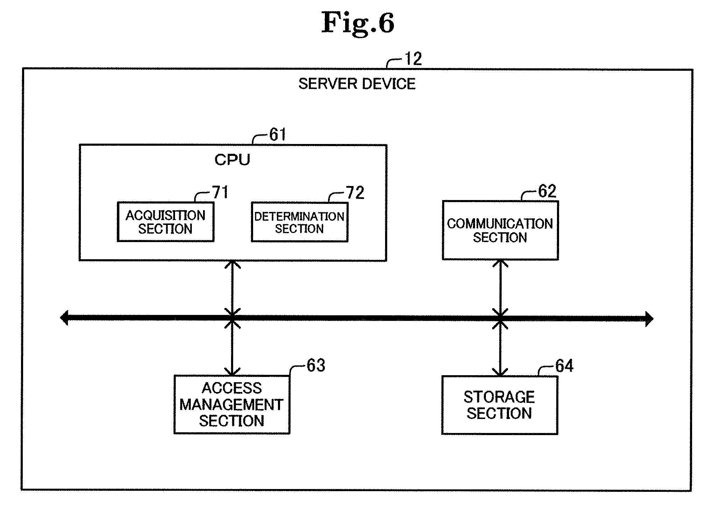

Next, the configuration of the server device 12 will be described with reference to Fig. 6. As shown in Fig. 6, the server device 12 includes a CPU 61, a communication section 62, an access management section 63, and a storage section 64. The CPU 61 reads a program having been stored in the storage section 64 in advance to a RAM (not shown), and performs processing of the server device 12. For example, the server device 12 (CPU 61) executes a program to thereby perform processing of an acquisition section 71 and a determination section 72.

The communication section 62 receives connection request information from any of the information processing devices 11 over the communication network NW. Further, the communication section 62 transmits information representing a determination result which is a result of determining whether or not to establish a connection with the information processing device 11 by the determination section 72, to the information processing device 11 as response information.

The access management section 63 manages access statuses from the information processing devices 11. For example, the access management section 63 manages the number of total accesses (access information) from a plurality of information processing devices 11. It should be noted that the access management section 63 may be included in another device managing the server device 12 (e.g., server management device), instead of being included in the server device 12.

The storage section 64 stores, in advance, display information for causing the display device 31 of the information processing device 11 to display a connection failure. The storage section 64 is also able to store sound information for causing the sound output device 32 of the information processing device 11 to output sounds. Further, the storage section 64 is able to store vibration information for controlling the vibration device 33 so as to vibrate the information processing device 11.

The acquisition section 71 acquires access information from the access management section 63. The determination section 72 determines whether or not to establish a connection with the information processing device 11, based on the access information acquired by the acquisition section 71. For example, the determination section 72 determines whether the number of total accesses shown by the access information is less than a predetermined threshold. If the determination section 72 determines to establish a connection with the information processing device 11 (for example, if the number of total accesses is less than the threshold), the acquisition section 71 acquires information representing a connection success as response information. Information representing a connection success is information for offering a service held by the server device 12, for example. For example, the acquisition section 71 acquires information for providing tickets of an event (e.g., concert or watching sport game) to the user operating the information processing device 11.

On the other hand, if the determination section 72 determines not to establish a connection with the information processing device 11 (if the number of total accesses is not less that the threshold, for example), the acquisition section 71 acquires information representing a connection failure as response information. Information representing a connection failure is information including the display information stored in the storage section. For example, the acquisition section 71 acquires text "The server is too busy at the moment, so you may not be connected. Please try again later." (display information). Further, information representing a connection failure may include at least one of the sound information and the vibration information stored in the storage section 64.

### [Operation]

Next, operation of the above-described information processing system 1 will be described in detail with reference to Figs. 7 and 8. Fig. 7 is a flowchart explaining connection processing of the information processing device 11. Fig. 8 is a flowchart explaining connection determination processing of the server device 12.

First, at step S1 in Fig. 7, the input section 23 of the information processing device 11 accepts an input of destination information for establishing a connection with the server device 12, from a user. Then, at step S2, the storage section 26 of the information processing device 11 stores the destination information, the input of which has been accepted through the processing at step S1. Then, at step S3, the communication section 24 of the information processing device 11 transmits connection request information to the server device 12 over the communication network.

Next, at step S21 in Fig. 8, the communication section 62 of the server device 12 receives the connection request information transmitted from the information processing device 11 through the processing at step S3. Then, at step S22, the acquisition section 71 of the server device 12 acquires access information (e.g., the number of current total accesses) from the access management section 63. Then, at step S23, the determination section 72 of the server device 12 determines whether or not to establish a connection with the information processing device 11 which transmitted the connection request information. At step S23, if it is determined to establish a connection with the information processing device 11 (step S23: Yes), that is, if the number of total accesses (access information) acquired by the acquisition section 71 is less than a predetermined threshold, for example, the processing proceeds to step S24. Then, at step S24, the acquisition section 71 of the server device 12 acquires information representing a connection success as response information.

On the other hand, at step S23, if it is determined not to establish a connection with the information processing device 11 (step S23: No), that is, if the the number of total accesses acquired by the acquisition section 71 is not less than a predetermined threshold, for example, the processing proceeds to step S25. Then, at step S25, the acquisition section 71 of the server device 12 acquires information representing a connection failure as response information. After the processing at steps S24 and S25, at step S26, the communication section 62 of the server device 12 transmits response information to the information processing device 11 which transmitted the connection request information. After the processing at step S26, the connection determination processing of the server device 12 ends.

Next, at step S4 in Fig. 7, the communication section 24 of the information processing device 11 receives the response information transmitted from the server device 12 by the processing at step S26 shown in Fig. 8. Then, at step S5, the acquisition section 41 of the information processing device 11 acquires the display information from the response information received through the processing at step S4. Then, at step S6, the extraction section 42 of the information processing device 11 extracts a display character string from the display information acquired through the processing at step S5. The extraction section 42 extracts text that "The server is too busy at the moment, so you may not be connected. Please try again later." displayed on the display device 31 as shown in Fig. 4, for example, as a display character string. The extraction section 42 is also able to extract text "connection failed" included in the image displayed on the display device 31 as shown in Fig. 5, for example, as a display character string.

Next, at step S7, the acquisition section 41 of the information processing device 11 acquires a stored character string stored in the character string database 27. For example, the acquisition section 41 acquires text that "The server is too busy at the moment, so you may not be connected." as a stored character string. Then, at step S8, the determination section 43 of the information processing device 11 determines whether the stored character string acquired through the processing at step S7 matches the display character string extracted through the processing at step S6. At step S8, if it is determined that the stored character string matches the display character string (step S8: Yes), that is, if a connection with the server device 12 failed, the processing proceeds to step S9. Then, at step S9, the acquisition section 41 of the information processing device 11 acquires the destination information stored through the processing at step S2, from the storage section 26. After the processing at step S9, the processing is back to step S3 and the subsequent processing is repeated. This means that if a connection with the server device 12 failed, the information processing device 11 automatically begins processing for establishing a connection with the server device 12 (steps S3 to S10) again.

On the other hand, at step S8, if it is determined that the stored character string does not match the display character string (step S8: No), that is, if a connection with the server device 12 succeeded, the processing proceeds to step S10. Then, at step S10, the output section 25 (e.g., display device 31) of the information processing device 11 outputs notice information representing a success of connection with the server device 12. After the processing at step S10, the connection processing by the information processing device 11 ends. Consequently, the user is able to use the service (e.g., purchase of tickets) offered by the server device 12.

In this way, as connection request information is automatically transmitted continuously until the information processing device 11 establishes a connection with the server device 12, it is possible to reduce the burden on the user and to improve convenience. Further, as the information processing device 11 outputs notice information representing that a connection with the server device 12 succeeded, the user does not need to operate and watch the information processing device 11 until a connection between the information processing device 11 and the server device 12 is established successfully, whereby the user convenience can be improved.

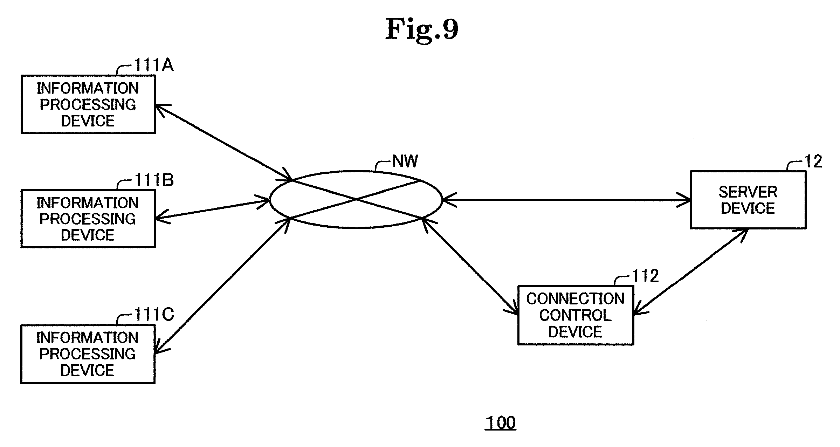

It should be noted that while, in the information processing system 1, the information processing device 11 determines whether or not a connection with the server device 12 succeeded based on the character string included in the display information, a device other than the information processing device 11 may determine whether or not a connection between the information processing device 11 and the server device 12 succeeded. With reference to Figs. 9 to 13, the case where another device determines whether or not a connection between the information processing device 11 and the server device 12 succeeded will be described.

### <SECOND EXEMPLARY EMBODIMENT>

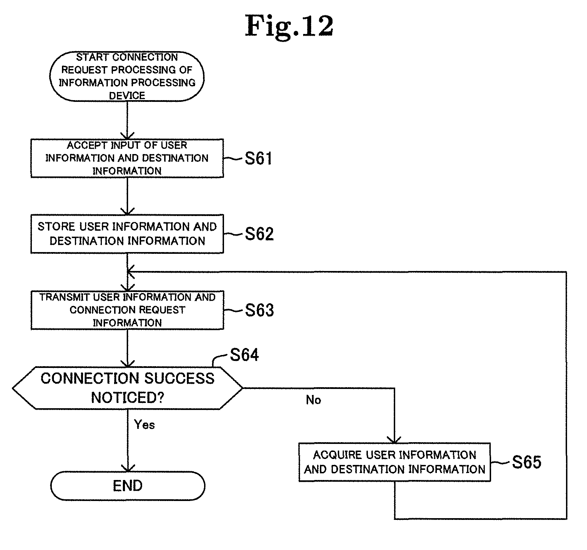

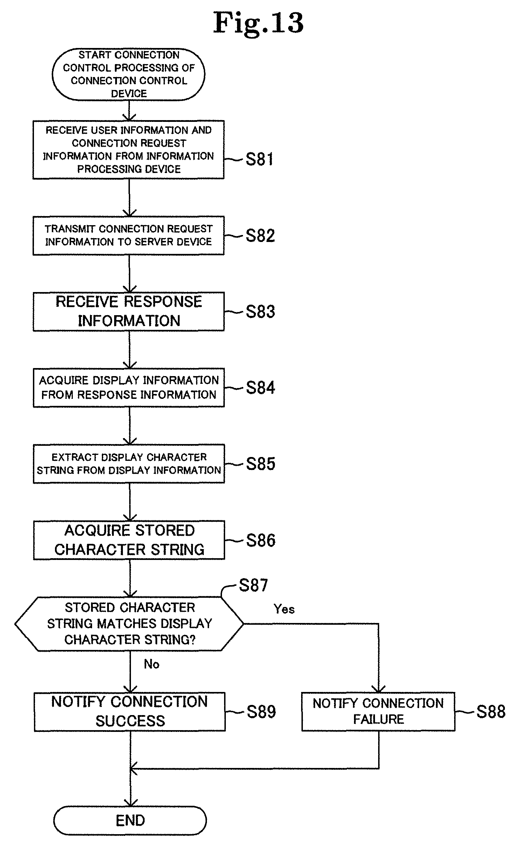

A second exemplary embodiment of the present invention will be described with reference to Figs. 9 to 13. Figs. 9 to 11 are diagrams for explaining a configuration of an information processing system 100. Figs. 12 and 13 are diagrams for explaining operation of the information processing system 100.

### [Configuration]

Fig. 9 is a block diagram showing a configuration of the information processing system 100 according to the second exemplary embodiment. As shown in Fig. 9, the information processing system 100 includes information processing devices 111 (information processing devices 111A to 111 C), a connection control device 112, a server device 12, and a communication network NW. It should be note that the elements corresponding to those of the information processing system 1 in Fig. 1 are denoted by the same reference numerals. As such, the information processing system 100 differs from the information processing system 1 in that it includes the information processing devices 111 instead of the information processing devices 11, and also includes the connection control device 112. Other configurations are the same as those of the information processing system 1.

In the information processing system 100, each of the information processing devices 111 transmits user information and connection request information to the connection control device 112 over the communication network NW. User information is information for identifying each of the information processing devices 111. When the connection control device 112 receives user information and connection request information from any of the information processing devices 111, the connection control device 112 transmits the received connection request information to the server device 12. Then, the server device 12 determines whether or not to establish a connection with the information processing device 111 which transmitted the connection request information, based on the acquired access information, and transmits a determination result to the connection control device 112. The connection control device 112 receives the determination result transmitted from the server device 12, and determines whether or not a connection between the information processing device 111 and the server device 12 succeeded. If the connection control device 112 determines that a connection succeeded, the connection control device 112 notifies the information processing device 111 shown in the user information of a connection success. On the other hand, if the connection control device 112 determines that a connection failed, the connection control device 112 notifies the information processing device 111 shown in the user information of a connection failure.

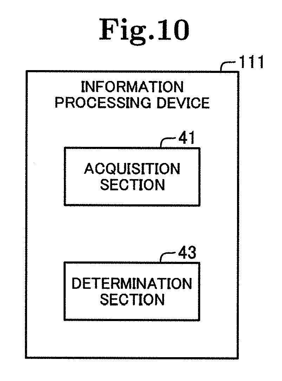

Fig. 10 is a block diagram showing a functional configuration of the information processing device 111. The information processing device 111 differs from the information processing device 11 in that the extraction section 42 shown in Fig. 3 is omitted, and the other configurations are the same as those of the information processing device 11 shown in Figs. 2 and 3.

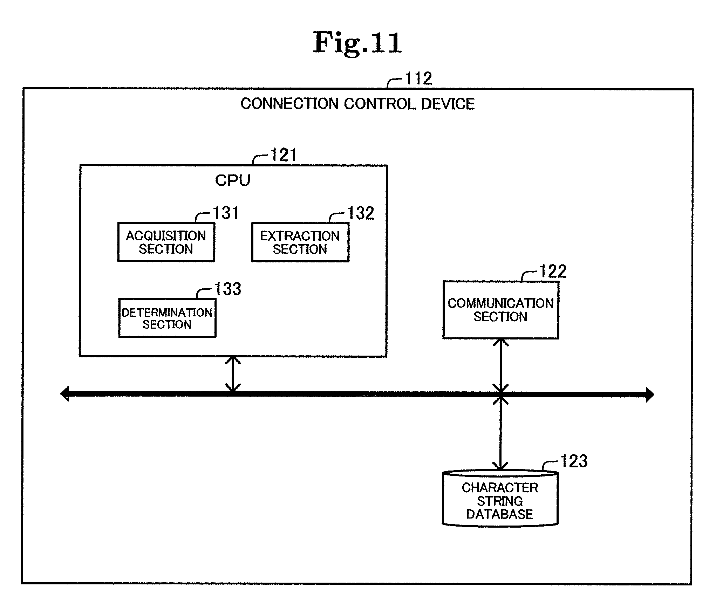

Fig. 11 is a block diagram showing a configuration of the connection control device 112. As shown in Fig. 11, the connection control device 112 includes a CPU 121, a communication section 122, and a character string database 123. Further, the CPU 121 reads a program, having been stored, to a RAM (not shown), and performs processing of the connection control device 112. For example, the information processing device 111 (CPU 121) executes a program to thereby perform processing of an acquisition section 131, an extraction section 132, and a determination section 133. It should be noted that as the acquisition section 131, the extraction section 132, and the determination section 133 of the connection control device 112 are similar to the acquisition section 41, the extraction section 42, and the determination section 43 of the information processing device 11 shown in Fig. 3, detailed description thereof is omitted. Further, as the character string database 123 of the connection control device 112 is similar to the character string database 27 of the information processing device 11 shown in Fig. 2, the detailed description thereof is omitted.

The communication section 122 receives, from any of the information processing devices 111 over the communication network NW, user information for identifying the information processing device 111, and connection request information for establishing a connection (communicating) with the server device 12 by the information processing device 111. Further, the communication section 122 transmits the received connection request information to the server device 12. When the server device 12 receives the connection request information from the connection control device 112, the server device 12 acquires access information. Then, based on the acquired access information, the server device 12 determines whether or not to establish a connection with the information processing device 111, and transmits response information representing a determination result (connection success or connection failure) to the connection control device 112. The communication section 122 of the connection control device 112 receives the response information with respect to the connection request information from the server device 12.

The acquisition section 131 acquires display information from the response information transmitted from the server device 12 and received by the communication section 122. Display information is information displayed by the display device 31 of the information processing device 111. The extraction section 132 extracts a display character string (extraction information) which is a character string (information satisfying predetermined criteria) included in the display information, from the display information. The character string database 123 stores a stored character string which is a predetermined character string. Then, the acquisition section 131 acquires a stored character string stored in the character string database 123.

The determination section 133 determines whether or not the stored character string acquired by the acquisition section 131 matches the display character string extracted by the extraction section 132. If the determination section 133 determines that the stored character string matches the display character string, the determination section 133 determines that a connection between the information processing device 111 and the server device 12 failed. On the other hand, if the determination section 133 determines that the stored character string does not match the display character string, the determination section 133 determines that a connection between the information processing device 111 and the server device 12 succeeded. Then, the communication section 122 notifies the information processing device 111 shown in the user information of the determination result (connection success or connection failure).

### [Operation]

Next, operation of the information processing system 100 will be described with reference to Figs. 12 and 13. Fig. 12 is a flowchart explaining connection request processing of the information processing device 111. Fig. 13 is a flowchart explaining connection control processing of the connection control device 112. It should be noted that as the operation of the server device 12 is similar to the connection determination processing shown in Fig. 8, the detailed description thereof is omitted.

First, at step S61 in Fig. 12, the input section 23 of the information processing device 111 accepts an input of user information for identifying the information processing device 111 (user) and destination information for establishing a connection with the server device 12. Then, at step S62, the storage section 26 of the information processing device 111 stores the user information and the destination information, the input of which was accepted through the processing at step S61. Then, at step S63, the communication section 24 of the information processing device 111 transmits connection request information to the connection control device 112 over the communication network NW.

Next, at step S81 in Fig. 13, the communication section 122 of the connection control device 112 receives the user information and the connection request information transmitted from the information processing device 111 through the processing at step S63. Then, at step S82, the communication section 122 of the connection control device 112 transmits the received connection request information to the server device 12.

At step S21 in Fig. 8, the communication section 62 of the server device 12 receives the connection request information transmitted from the connection control device 112 through the processing at step S82 in Fig. 13. Then, at step S22, the acquisition section 71 of the server device 12 acquires access information (e.g., the number of current total accesses) from the access management section 63. Then, at step S23, the determination section 72 of the server device 12 determines whether or not to establish a connection with the information processing device 111 which transmitted the connection request information. As step S23, if it is determined to establish a connection with the information processing device 111 (step S23: Yes), at step S24, the acquisition section 71 of the server device 12 acquires information representing a connection success as response information.

On the other hand, at step S23, if it is determined not to establish a connection with the information processing device 111 (step S23: No), at step S25, the acquisition section 71 of the server device 12 acquires information representing a connection failure as response information. After the processing at steps S24 and S25, at step S26, the communication section 62 of the server device 12 transmits the response information to the connection control device 112. After the processing at step S26, the connection determination processing of the server device 12 ends.

Next, at step S83 in Fig. 13, the communication section 122 of the connection control device 112 receives the response information transmitted from the server device 12 through the processing at step S26 in Fig. 8. Then, at step S84, the acquisition section 131 of the connection control device 112 acquires display information from the response information received through the processing at step S83. Then, at step S85, the extraction section 132 of the connection control device 112 extracts a display character string from the display information acquired through the processing at step S84.

Next, at step S86, the acquisition section 131 of the connection control device 112 acquires a stored character string stored in the character string database 123. Then, at step S87, the determination section 133 of the connection control device 112 determines whether the stored character string acquired through the processing at step S86 matches the display character string extracted through the processing at step S85. At step S87, if it is determined that the stored character string matches the display character string (step S87: Yes), at step S88, the communication section 122 of the connection control device 112 notifies the information processing device 111 of a connection failure, over the communication network NW. On the other hand, at step S87, if it is determined that the stored character string does not match the display character string (step S87: No), at step S89, the communication section 122 of the connection control device 112 notifies the information processing device 111 of a connection success, over the communication network NW. After the processing at steps S88 and S89, the connection control processing of the connection control device 112 ends.

Then, at step S64 in Fig. 12, the determination section 43 of the information processing device 111 determines whether or not a connection success has been notified from the connection control device 112. This means that the determination section 43 determines whether or not a notice of a connection success by the communication section 24 has been received. At step S64, if it is determined that a connection success has not been notified (step S64: No), that is, if a connection failure is notified from the connection control device 112 through the processing at step S88 in Fig. 13, the processing proceeds to step S65. Then, at step S65, the acquisition section 41 of the information processing device 111 acquires the user information and the destination information stored in the storage section 26. After the processing at step S65, the processing is back to step S63 and the subsequent processing is repeated. Thereby, the information processing device 111 is able to automatically transmit connection request information to the server device 12 (connection control device 112) until a connection with the server device 12 is established successfully.

On the other hand, at step S64, if it is determined that a connection success has been notified (step S64: Yes), that is, if a connection success is notified from the connection control device 112 through the processing at step S89 in Fig. 13, the connection request processing of the information processing device 111 ends. Consequently, the user is able to use the service (e.g., purchase of tickets) offered by the server device 12.

In this way, the connection control device 112 receives connection request information from each of the information processing devices 111, and determines whether a connection between each of the information processing devices 111 and the server device succeeded. Consequently, the information processing device 111 operated by a user is able to establish a connection between the information processing device 111 and the server device 12 with a simple configuration.

It should be noted that the present invention is not limited to the embodiments described above, and various changes can be made without departing from the scope of the present invention.

For example, the communication section 24 (or the acquisition section 41) of the information processing device 11 may newly acquire stored information (e.g., "connection failed", or the like) from the storage device storing stored information (e.g., stored character string), before transmitting connection request information to the server device 12. Then, the character string database 27 stores (updates) the acquired stored information. Thereby, as the information processing device 11 stores a plurality of types of stored information, it is possible to establish connections with a plurality of different server devices 12 more reliably. Similar to the case of the information processing device 11, the connection control device 112 is also able to acquire stored information from the storage device and stores (updates) the stored information.

Further, the input section 23 of the information processing device 11 (information processing device 111) may accept an input of information representing the time from a user, along with destination information. Then, the storage section 26 stores the input time. Thereby, when the input time comes, the information processing device 11 is able to automatically begin processing to establish a connection with the server device 12 (processing of steps S3 to S10 or processing of steps S63 to S65). As a result, when the sales start time of the tickets provided by the server device 12 comes, the information processing device 11 automatically performs processing for establishing a connection with the server device 12, whereby the user convenience can be improved.

### <Supplementary Notes>

The whole or part of the exemplary embodiments disclosed above can be described as, but not limited to, the following supplementary notes. Hereinafter, the outline of the configuration of an information processing device and the like according to the present invention will be described. However, the present invention is not limited to the configurations described below.

### (Supplementary Note 1)

An information processing device comprising:
communication means for transmitting connection request information to a server device, and receiving response information which is a response to the connection request information; and
determination means for determining whether or not a connection with the server device succeeded, based on display information which is included in the received response information and displayed on a display device, wherein
if the determination means determines that a connection with the server device failed, the communication means transmits the connection request information to the server device.

With this configuration, the connection request information is automatically transmitted until the time when a connection with the server device succeeds, based on the response information which is a response to the connection request information. Thereby, it is possible to reduce the burden on the user, and to improve convenience.

### (Supplementary Note 2)

The information processing device according to supplementary note 1, further comprising
extraction means for extracting information satisfying a predetermined criterion, included in the display information, from the display information as extraction information, wherein
the determination means determines that a connection with the server device failed if stored information, stored in advance, matches the extracted extraction information.

With this configuration, it is determined that a connection with the server device failed if the stored information, stored in advance, matches the extraction information extracted from the display information. As such, it is possible to determine a connection failure with the server device with a simple configuration.

### (Supplementary Note 3)

The information processing device according to supplementary note 2, wherein
the extraction means extracts a display character string which is a character string included in the display information, from the display information as the extraction information, and
the determination means determines that a connection with the server device failed if a stored character string, which is a character string included in the stored information, matches the extracted display character string.

With this configuration, it is determined that a connection with the server device failed if the stored character string, stored in advance, matches the display character string extracted from the display information. As such, a connection failure with the server device can be determined more reliably with a simple configuration. Consequently, it is possible to establish a connection with the server device more reliably, and to reduce the burden on the user.

### (Supplementary Note 4)

The information processing device according to supplementary note 2 or 3, wherein
the extraction means extracts a display character string which is a character string displayed in an image included in the display information, from the display information as the extraction information, and
the determination means determines that a connection with the server device failed if a stored character string, which is a character string included in the stored information, matches the extracted display character string.

With this configuration, it is determined that a connection with the server device failed if the stored character string, stored in advance, matches the display character string displayed in the image. As such, it is possible to determine a connection failure with the server device with respect to various types of response information. Consequently, it is possible to establish a connection with the server device more reliably, and to reduce the burden on the user.

### (Supplementary Note 5)

The information processing device according to any of supplementary notes 2 to 4, wherein
the communication means acquires stored information from a storage device for storing the stored information, before transmitting the connection request information to the server device, and
the information processing device further comprises storage means for storing the acquired stored information.

With this configuration, as a plurality of kinds of stored information are stored, it is possible to establish connections with a plurality of different server devices more reliably.

### (Supplementary Note 6)

The information processing device according to supplementary note 1 or 5, further comprising
output means for outputting notice information, representing that a connection with the server device succeeded, to the outside of the information processing device, if the determination means determines that a connection with the server device succeeded.

With this configuration, as the information processing device outputs notice information representing that a connection with the server device succeeded to the user, the user does not need to operate and watch the information processing device until a connection with the server device succeeds. Thereby, user convenience can be improved.

### (Supplementary Note 7)

The information processing device according to supplementary note 6, wherein
the output means outputs the notice information by blinking a display screen of the display device, if the determination means determines that a connection with the server device succeeded.

With this configuration, as the information processing device displays that a connection with the server device succeeded on the display screen, the user is able to easily recognize that a connection with the server device succeeded.

### (Supplementary Note 8)

The information processing device according to supplementary note 6 or 7, wherein
the output means outputs the notice information by vibration, if the determination means determines that a connection with the server device succeeded.

With this configuration, as the notice information is output by vibration, the user does not need to watch the display screen of the information processing device. Thereby, user convenience can be improved.

### (Supplementary Note 9)

An information processing method comprising:
transmitting connection request information to a server device, and receiving response information which is a response to the connection request information;
determining whether or not a connection with the server device succeeded, based on display information which is included in the received response information and displayed on a display device; and
if it is determined that a connection with the server device failed, transmitting the connection request information to the server device.

### (Supplementary Note 10)

A program for causing an information processing device to realize:
communication means for transmitting connection request information to a server device, and receiving response information which is a response to the connection request information; and
determination means for determining whether or not a connection with the server device succeeded, based on display information which is included in the received response information and displayed on a display device, wherein
if the determination means determines that a connection with the server device failed, the communication means transmits the connection request information to the server device.

It should be noted that the program described in the above-described embodiments and the supplementary notes are stored in a storage device or recorded on a computer-readable medium. For example, the medium is a portable medium such as a flexible disk, an optical disk, a magneto-optical disk, a semiconductor memory, or the like.

While the present invention has been described with reference to the exemplary embodiments described above, the present invention is not limited to the above-described embodiments. The form and details of the present invention can be changed within the scope of the present invention in various manners that can be understood by those skilled in the art.

The present invention is based upon and claims the benefit of priority from Japanese patent application No. 2012-079716, filed on March 30, 2012, the disclosure of which is incorporated herein in its entirety by reference.

### REFERENCE NUMERALS

- 1: information processing system
- 11: information processing device
- 12: server device
- 23: input section
- 24: communication section
- 25: output section
- 26: storage section
- 27: character string database
- 31: display device
- 32: sound output device
- 33: vibration device
- 41: acquisition section
- 42: extraction section
- 43: determination section
- 62: communication section
- 63: access management section
- 64: storage section
- 71: acquisition section
- 72: determination section
- 100: information processing system
- 111: information processing device
- 112: connection control device
- 122: communication section
- 123: character string database
- 131: acquisition section
- 132: extraction section
- 133: determination section

## Claims

1. An information processing device comprising:
communication means for transmitting connection request information to a server device, and receiving response information which is a response to the connection request information; and
determination means for determining whether or not a connection with the server device succeeded, based on display information which is included in the received response information and displayed on a display device, wherein
if the determination means determines that a connection with the server device failed, the communication means transmits the connection request information to the server device.

2. The information processing device according to Claim 1, further comprising extraction means for extracting information satisfying a predetermined criterion, included in the display information, from the display information as extraction information, wherein
the determination means determines that a connection with the server device failed if stored information, stored in advance, matches the extracted extraction information.

3. The information processing device according to Claim 2, wherein
the extraction means extracts a display character string which is a character string included in the display information, from the display information as the extraction information, and
the determination means determines that a connection with the server device failed if a stored character string, which is a character string included in the stored information, matches the extracted display character string.

4. The information processing device according to Claim 2 or 3, wherein
the extraction means extracts a display character string which is a character string displayed in an image included in the display information, from the display information as the extraction information, and
the determination means determines that a connection with the server device failed if a stored character string, which is a character string included in the stored information, matches the extracted display character string.

5. The information processing device according to any of Claims 2 to 4, wherein
the communication means acquires stored information from a storage device for storing the stored information, before transmitting the connection request information to the server device, and
the information processing device further comprises storage means for storing the acquired stored information.

6. The information processing device according to Claim 1 or 5, further comprising
output means for outputting notice information, representing that a connection with the server device succeeded, to the outside of the information processing device, if the determination means determines that a connection with the server device succeeded.

7. The information processing device according to Claim 6, wherein
the output means outputs the notice information by blinking a display screen of the display device, if the determination means determines that a connection with the server device succeeded.

8. The information processing device according to Claim 6 or 7, wherein
the output means outputs the notice information by vibration, if the determination means determines that a connection with the server device succeeded.

9. An information processing method comprising:
transmitting connection request information to a server device, and receiving response information which is a response to the connection request information;
determining whether or not a connection with the server device succeeded, based on display information which is included in the received response information and displayed on a display device; and
if it is determined that a connection with the server device failed, transmitting the connection request information to the server device.

10. A program for causing an information processing device to realize:
communication means for transmitting connection request information to a server device, and receiving response information which is a response to the connection request information; and
determination means for determining whether or not a connection with the server device succeeded, based on display information which is included in the received response information and displayed on a display device, wherein
if the determination means determines that a connection with the server device failed, the communication means transmits the connection request information to the server device.
